# EUROPÄISCHE PATENTSCHRIFT

(11) **EP 0 320 605 B1**
(45) Veröffentlichungstag und Bekanntmachung des Hinweises auf die Patenterteilung: **04.08.1993**
(21) Anmeldenummer: 88117904.8
(22) Anmeldetag: 27.10.1988
(51) Int. Cl.: H02M 3/156, H02M 3/155

(54) **Elektronisches Schaltnetzteil mit einem Drosselwandler**
Electronic switching power supply with an inductance DC-DC converter
Alimentation électronique à découpage avec un convertisseur à inductance

(30) Priorität: 16.12.1987 DE 3742613
(43) Veröffentlichungstag der Anmeldung: 21.06.1989
(73) Patentinhaber: Braun Aktiengesellschaft, Frankfurt am Main (DE)
(72) Erfinder: Bergk, Günther, D-6272 Niedernhausen (DE)

(56) Entgegenhaltungen:
- DE-A- 3 310 678

## Beschreibung

Die Erfindung bezieht sich auf eine Schaltung zur Regelung der Ausgangsspannung eines elektronischen Schaltnetzteils zur Stromversorgung eines zu einem Ausgangskondensator parallel geschalteten elektrischen Verbrauchers aus einer Gleichspannungsquelle unterschiedlicher Spannungshöhe mit einem Drosselwandler mit in Reihe zu einer Drossel geschalteter Schaltstrecke eines ersten Transistors, in dessen Leitphase die Drossel mit einem ansteigenden Strom aufgeladen wird und in dessen Sperrphase die in der Drossel gespeicherte Energie über eine Diode in den Ausgangskondensator fließt, der über den elektrischen Verbraucher entladen wird, mit einem in Reihe zum ersten Transistor geschalteten Emitterwiderstand, zu dem die Basis-Emitter-Strecke eines zweiten Transistors parallel liegt, dessen Kollektor mit der Basis des ersten Transistors verbunden ist, und mit einer mit der Drossel magnetisch gekoppelten Rückkopplungswicklung, wobei die Rückkopplungswicklung über die Reihenschaltung eines Strombegrenzungswiderstands und eines Rückkopplungskondensators einerseits an die Basis des ersten Transistors und andererseits an die Verbindung der Drossel mit dem Emitterwiderstand angeschlossen ist.

Elektronische Schaltnetzteile dienen zur Konstantspannungs- und/oder Konstantstromversorgung elektrischer oder elektronischer Geräte und sind als Drosselwandler, primär oder sekundär getaktete Sperr- oder Durchlaßwandler bzw. als Gegentaktwandler aufgebaut. Sie weisen in der Regel eine Gleichrichterschaltung mit nachgeschalteter Sieb- und Glättungsanordnung auf, an die ein Übertrager oder eine Drossel angeschlossen ist.

Dabei ist im Falle eines Drosselwandlers in Reihe zur Drossel und zum elektrischen Verbraucher ein elektronischer Schalter bzw. Schalttransistor vorgesehen, der in Abhängigkeit von einer oder mehreren Regelgrößen ein- und ausgeschaltet wird, wobei die in der Drossel gespeicherte Energie in der Sperrphase des elektronischen Schalters über eine entsprechend gepolte Diode an den elektrischen Verbraucher abgegeben wird.

Eine Schaltung der eingangs genannten Art ist aus der DE-PS 33 10 678 bekannt. Zur Regelung der Ausgangsspannung wird dort u.a. ein Elektrolytkondensator 10 verwendet. Aus Platz- und Zuverlässigkeitsgründen ist man aber bestrebt, bei Schaltungen die Verwendung von Elektrolytkondensatoren möglichst zu vermeiden. Außerdem muß die Diode 8 in der bekannten Schaltung eine verhältnismäßig große Spannungsfestigkeit aufweisen.

Der Erfindung liegt deshalb die Aufgabe zugrunde, eine Schaltung zu konzipieren, die ohne größeren Bauteile- oder Kostenaufwand die genannten Bauteile nicht aufweist.

Diese Aufgabe wird bei einer Schaltung der eingangs genannten Art dadurch gelöst, daß die zur Regelung der Ausgangsspannung benötigte Änderung der Zeit, In welcher Strom aus der Drossel in den Ausgangskondensator fließt, mittels eines Schwellwertschalters erfolgt, der zwischen den mit dem Ausgangskondensator in Verbindung stehenden Endpunkt der Drossel und Bezugspotential geschaltet ist und dabei die Wicklung der Drossel kurzschließt und daß zwischen dem Endpunkt und dem Ausgangskondensator eine Entkopplungseinrichtung eingefügt ist.

Die erfindungsgemäße Schaltung eignet sich für Gleichspannungen und - mit einem vorgeschalteten Gleichrichter - für Wechselspannungen beliebiger Frequenz. Bei allen in Stromversorgungsnetzen vorkommenden Spannungen samt deren Schwankungen, beispielsweise zwischen 70 und 260 Volt, wird eine konstante Ausgangsspannung geliefert. Der elektrische Verbraucher kann z.B. der Gleichstrommotor eines kleinen Haushaltsgeräts, wie beispielsweise eines Elektrorasierers, oder/und ein Akkumulator sein.

In einer vorteilhaften Ausgestaltung ist die Schaltung so konzipiert, daß die in der Drossel gespeicherte Energie über die Basis-Emitter-Strecke des zweiten Transistors fließt. Hierdurch ist während der gesamten Entladephase der Drossel die Basis-Emitter-Strecke des ersten Transistors kurzgeschlossen, wodurch der erste Transistor sicher gesperrt bleibt.

Wenn auch der Strom, der während des Kurzschließens der Wicklung der Drossel fließt, über die Basis-Emitter-Strecke des zweiten Transistors geleitet wird, bleibt der erste Transistor auch in dieser Phase sicher gesperrt. Eine einfache Ausführungsform des Schwellwertschalters hierzu ist im Anspruch 4 beschrieben.

Weitere vorteilhafte Ausgestaltungen sind den übrigen Ansprüchen entnehmbar.

Anhand der in der Zeichnung dargestellten Ausführungsbeispiele wird die Erfindung im folgenden näher erläutert.
Es zeigen:
- Fig. 1: ein elektronisches Schaltnetzteil, bei dem sowohl der Entladestrom als auch der Kurzschlußstrom der Drossel über die Basis-Emitter-Strecke des zweiten Transistors fließt,
- Fig. 2: eine Ausführungsform eines Schwellwertschalters bei einer Schaltung entsprechend Fig. 1,
- Fig. 3 und 4: Spannungs- und Stromverläufe in der Schaltung nach Fig. 2, in Fig. 3 im Leerlauf und in Fig. 4 bei Teillast.

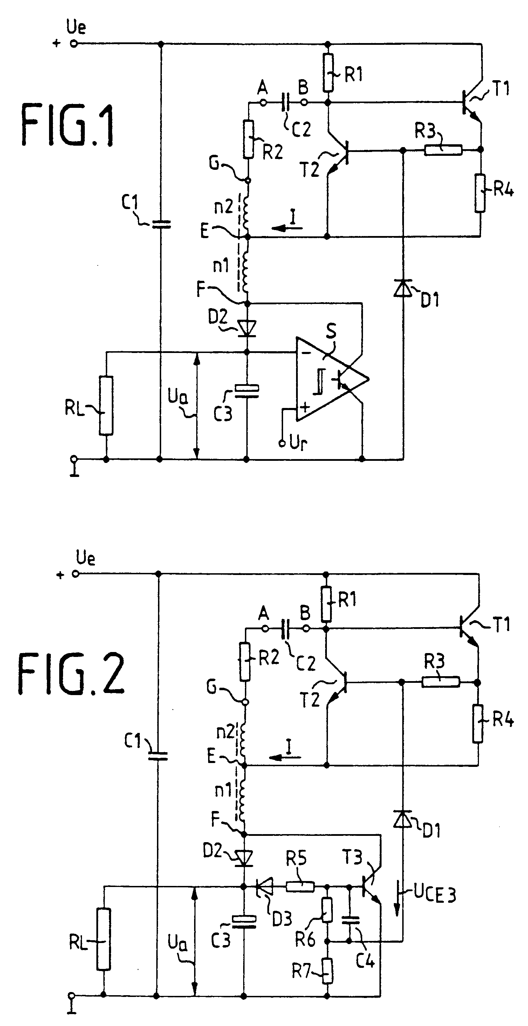

In Fig. 1 liegt zwischen den beiden Polen einer Gleichspannungsquelle Ue die Serienschaltung eines ersten Transistors T1, eines Emitterwiderstandes R4, einer Drossel n1, einer Entkopplungsdiode D2 und einer Parallelschaltung aus einem Ausgangskondensator C3 mit einem Lastwiderstand RL. An der Parallelschaltung aus Lastwiderstand RL und Ausgangskondensator C3 liegt die Ausgangsspannung Ua an. Die beiden Pole der Gleichspannungsquelle Ue sind durch einen Siebkondensator C1 überbrückt um die Eingangsspannung Ue, die beispielsweise die sinusförmige, gleichgerichtete Spannung eines an ein Wechselspannungsnetz angeschlossenen Gleichrichters sein kann, zu glätten. Zwischen dem Kollektor des Transistors T1, der am positiven Pol der Eingangsspannung Ue liegt, und dem Verbindungspunkt des Emitterwiderstandes R4 mit der Drossel n1 (Punkt E) liegt die Serienschaltung eines Eingangswiderstandes R1 und die Schaltstrecke eines zweiten Transistors T2, dessen Basis über einen Basiswiderstand R3 mit dem Emitter des Transistors T1 verbunden ist. Die Basis des Transistors T1 liegt einerseits am Verbindungspunkt des Kollektors des Transistors T2 mit dem Eingangswiderstand R1 und andererseits über einen Rückkopplungskondensator C2 und einen Strombegrenzungswiderstand R2 an einer Rückkopplungswicklung n2, deren anderes Ende mit dem Punkt E verbunden ist. Die Wicklung der Drossel n1 und die Rückkopplungswicklung n2 sind miteinander magnetisch gekoppelt und haben den gleichen Wicklungssinn. Der Minuspol der Eingangsspannung Ue, der hier das Bezugspotential darstellt, ist über eine Diode D1 mit der Basis des Transistors T2 verbunden. Der Verbindungspunkt F der Drossel n1 mit der Entkopplungsdiode D2 liegt über die Schaltstrecke eines Schwellwertschalters S an Bezugspotential. Der Schwellwertschalter S wird von der Differenz der Ausgangsspannung Ua und einer Referenzspannung Ur angesteuert.

Wird nun die Eingangsspannung Ue angelegt, erhält der Transistor T1 über den Eingangswiderstand R1 einen geringen Basisstrom. Der um den Stromverstärkungsfaktor des Transistors T1 verstärkte Emitterstrom fließt über den Emitterwiderstand R4, die Drossel n1, die Entkopplungsdiode D2 und den Ausgangskondensator C3 bzw. den Lastwiderstand RL zum Bezugspotential. Dieser Lastwiderstand RL kann beispielsweise ein Gleichstrommotor sein. Dieser Primärstrom I1 induziert in der Rückkopplungswicklung n2 eine Spannung, die über den Strombegrenzungswiderstand R2 und den Rückkopplungskondensator C2 den Transistor T1 sehr schnell bis zur Sättigung durchschaltet.

Erreicht nun der Spannungsabfall am Emitterwiderstand R4 infolge des linear ansteigenden Primärstromes I1 den Schwellwert der Basis-Emitter-Strecke des Transistors T2, wird dieser über den Basiswiderstand R3 durchgeschaltet. Dies führt sofort zur Sperrung des Transistors T1, da die Basis-Emitter-Strecke des Transistors T1 kurzgeschlossen wird. Gleichzeitig wird der Rückkopplungskondensator C2 entladen und anschließend umgeladen, da bei Sperrung des Transistors T1 die in der Rückkopplungswicklung n2 induzierte Spannung sprungartig umgepolt wird.

Während der Durchlaßphase des Transistors T1 hatte sich in der Drossel n1 eine Spannung aufgebaut, deren Potential am Punkt E positiv gegenüber dem Potential am Punkt F war. Nach der Sperrung des Transistors T1, das heißt bei Abnahme des Stromes I in die Drossel n1, kehrt sich die an der Drossel n1 anliegende Spannung schlagartig um, so daß nun der Punkt F gegenüber dem Punkt E positiv ist. Die nun in der Drossel n1 gespeicherte Energie fließt in Form eines Sekundärstromes I2 über die Entkopplungsdiode D2, den Ausgangskondensator C3, die Diode D1 und die Basis-Emitter-Strecke des Transistors T2 zum Punkt E. Dieser über die Basis-Emitter-Strecke des Transistors T2 fließende Sekundärstrom I2 hat den Vorteil, daß die Basis-Emitter-Stecke des Transistors T1 während der gesamten Entladezeit der Drossel kurzgeschlossen bleibt und der Rückkopplungskondensator C2 umgeladen wird, wobei nach dieser Umladung der Punkt B an der rechten Elektrode gegenüber dem Punkt A an der linken Elektrode eine positive Spannung aufweist. Dadurch wird nach Beendigung des Sekundärstromflußes der Transistor T1 sofort wieder schlagartig durchgeschaltet.

Hat die Ausgangsspannung Ua ihren Sollwert erreicht, wird der Schwellwertschalter S durchgeschaltet und verbindet das untere Ende der Wicklung der Drossel n1 (Punkt F) über die Diode D1 und die Basis-Emitter-Strecke des Transistors T2 mit dem oberen Ende der Wicklung der Drossel n1 (Punkt E). Die Wicklung der Drossel n1 ist jetzt über zwei Diodenstrecken, nämlich die Diode D1 und die Basis-Emitter-Diode des Transistors T2, kurzgeschlossen. Diese Klemmung der Wicklung der Drossel n1 auf eine Spannung, die sehr viel kleiner als die Ausgangsspannung Ua ist, bewirkt eine große Verlängerung der Entladeflußzeit, da die in der Drossel n1 gespeicherte Energie nur durch die im geschlossenen Kreis auftretenden Verluste aufgezehrt wird.

In Fig. 2 ist eine einfache Ausführungsform des Schwellwertschalters S von Fig. 1 dargestellt. Gleiche Bauteile sind hier in Fig. 2 mit der gleichen Bezeichnung versehen wie in Fig. 1. Der Schwellwertschalter S besteht hier aus einem dritten Transistor T3, dessen Schaltstrecke zwischen dem Anschlußpunkt F am lastseitigen Ende der Drossel n1 und Bezugspotential liegt. Seine Basis ist einerseits über einen Entkopplungswiderstand R5 und eine Zenerdiode D3 mit dem positiven Ende des Ausgangskondensators C3 bzw. des Lastwiderstandes RL und andererseits über einen aus den Widerständen R6 und R7 bestehenden Spannungsteiler mit Bezugspotential verbunden. Das anodenseitige Ende der Diode D1 ist hier mit dem Verbindungspunkt der beiden Widerstände R6 und R7 anstatt mit Bezugspotential wie in Fig. 1 verbunden. Parallel zum Widerstand R6 liegt ein Kondensator C4, um diese Verbindung dynamisch niederohmig zu machen. Übersteigt die Ausgangsspannung Ua ihren Sollwert, wird die Zenerdiode D3 leitend und schaltet den Transistor T3 durch. Die Entkopplungsdiode D2 verhindert, daß sich bei durchgeschaltetem Transistor T3 der Ausgangskondensator C3 über die Schaltstrecke des Transistors T3 entladen kann.

Sowohl der über den Widerstand R7 fließende Sekundärstrom I2 als auch der Kurzschlußstrom I3 erzeugen an diesem Widerstand eine dem Strom proportionale, abfallende Spannung kleiner Größe, wobei der Verbindungspunkt der Widerstände R6 und R7 gegenüber Bezugspotential negativ ist. Dies bewirkt über den Widerstand R6 und den parallel geschalteten Kondensator C4 eine Anhebung der positiven Spannung an der Basis des Transistors T3 und stellt eine positive Rückkopplung dar.

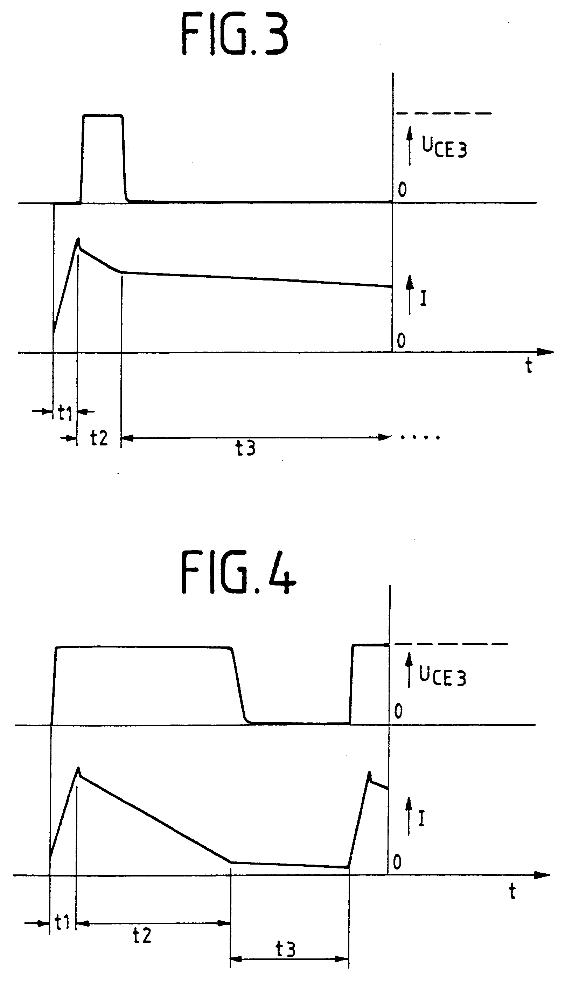

In den Fig. 3 und 4 ist die Kollektor-Emitter-Spannung U_{CE3} des Transistors T3 und der im Punkt E fließende Strom I in den verschiedenen Phasen dargestellt. Fig. 3 zeigt diese Kurvenverläufe im Leerlauf und Fig. 4 bei Teillast. Das Zeitintervall t1 ist hierbei die Zeit, in der Primärstrom I1 in die Drossel n1 fließt, das heißt T1 ist leitend. Während des Zeitintervalls t2 fließt Sekundärstrom I2 aus der Drossel n1 über die Diode D1 und die Basis-Emitter-Strecke des Transistors T2 in die Last, das heißt in den Ausgangskondensator C3 und den Lastwiderstand RL. In diesem Zeitintervall t2 ist sowohl der Transistor T1 als auch der Transistor T3 gesperrt. Im Zeitintervall t3 ist der Transistor T3 leitend und es fließt nur in der Drossel n1 über die Schaltstrecke des Transistors T3, die Diode D1 und die Basis-Emitter-Strecke des Transistors T2 Strom. Der leicht abfallende Wert des Kurzschlußstromes während des Zeitintervalls t3 ist auf die Verluste in der Drossel n1, in der Basis-Emitter-Diode des Transistors T2 und in der Diode D1 zurückzuführen.

Wie nun ein Vergleich der Kurvenverläufe von Fig. 3 und Fig. 4 zeigt, ist das Zeitintervall t2, in welchem Sekundärstrom I2 aus der Drossel n1 in die Last fließt, im Leerlauf wesentlich kürzer als bei Teillast. Das Zeitintervall t3, in welchem die Wicklung der Drossel n1 kurzgeschlossen ist, ist im Leerlauf entsprechend länger als bei Teillast. Die zur Regelung der Ausgangsspannung Ua benötigte Änderung der Zeit t2 erfolgt also durch Kurzschließen der Wicklung n1.

Bei einem Ausführungsbeispiel ist die Ausgangsspannung Ua = 40 Volt und der Lastwiderstand RL ist ein Gleichstrommotor mit einer Leistung von ca. 5 Watt. Die Schwingfrequenz des Drosselwandlers beträgt ca. 30 - 50 kHz und die Frequenz der Pausen, das heißt wenn der Transistor T3 bzw. der Schwellwertschalter S durchgeschaltet ist, variiert je nach Belastungsfall.

## Patentansprüche

1. Schaltung zur Regelung der Ausgangsspannung (Ua) eines elektronischen Schaltnetzteils zur Stromversorgung eines zu einem Ausgangskondensator (C3) parallel geschalteten elektrischen Verbrauchers (RL) aus einer Gleichspannungsquelle (Ue) unterschiedlicher Spannungshöhe mit einem Drosselwandler mit in Reihe zu einer Drossel (n1) geschalteter Schaltstrecke eines ersten Transistors (T1), in dessen Leitphase die Drossel (n1) mit einem ansteigenden Strom aufgeladen wird und in dessen Sperrphase die in der Drossel (n1) gespeicherte Energie über eine Diode (D1) in den Ausgangskondensator (C3) fließt, der über den elektrischen Verbraucher (RL) entladen wird, mit einem in Reihe zum ersten Transistor (T1) geschalteten Emitterwiderstand (R4), zu dem die Basis-Emitter-Strecke eines zweiten Transistors (T2) parallel liegt, dessen Kollektor mit der Basis des ersten Transistors (T1) verbunden ist, und mit einer mit der Drossel (n1) magnetisch gekoppelten Rückkopplungswicklung (n2), wobei die Rückkopplungswicklung (n2) über die Reihenschaltung eines Strombegrenzungswiderstands (R2) und eines Rückkopplungskondensators (C2) einerseits an die Basis des ersten Transistors (T1) und andererseits an die Verbindung der Drossel (n1) mit dem Emitterwiderstand (R4) angeschlossen ist, dadurch gekennzeichnet, daß die zur Regelung der Ausgangsspannung (Ua) benötigte Änderung der Zeit (t2), in welcher Strom aus der Drossel (n1) in den Ausgangskondensator (C3) fließt, mittels eines Schwellwertschalters (S) erfolgt, der zwischen den mit dem Ausgangskondensator (C3) in Verbindung stehenden Endpunkt (F) der Drossel (n1) und Bezugspotential geschaltet ist und dabei die Wicklung der Drossel (n1) kurzschließt und daß zwischen dem Endpunkt (F) und dem Ausgangskondensator (C3) ein Entkopplungseinrichtung (D2) eingefügt ist

2. Schaltung nach Anspruch 1, dadurch gekennzeichnet, daß die in der Drossel (n1) gespeicherte Energie über die Diode (D1) und die Basis-Emitter-Strecke des zweiten Transistors (T2) in den Ausgangskondensator (C3) fließt.

3. Schaltung nach Anspruch 1, dadurch gekennzeichnet, daß der Schwellwertschalter (S) aus einem dritten Transistor (T3) besteht, dessen Schaltstrecke zwischen dem Anschlußpunkt (F) am lastseitigen Ende der Drossel (n1) und Bezugspotential liegt und dessen Basis einerseits über einen Entkopplungswiderstand (R5) und eine Zenerdiode (D3) mit dem Ausgangskondensator (C3) und andererseits über einen Widerstand (R6, R7) mit Bezugspotential in Verbindung steht.

4. Schaltung nach Anspruch 3, dadurch gekennzeichnet, daß der Widerstand aus einem Spannungsteiler (R6, R7) besteht, an dessen Verbindungspunkt die Diode (D1) angeschlossen ist und dessen mit der Basis verbundenem Widerstand (R6) ein Kondensator (C4) parallel geschaltet ist.

5. Schaltung nach Anspruch 1, dadurch gekennzeichnet, daß als Gleichspannungsquelle (Ue) ein an ein Wechselspannungsnetz angeschlossener Gleichrichter dient.

## Claims

1. A circuitry for regulating the output voltage (Ua) of an electronic switching power supply supplying power to an electrical load (RL) connected in parallel with an output capacitor (C3) from a dc voltage source (Ue) of varying voltage level, including a choke converter having the circuit of a first transistor (T1) connected in series with a choke (n1), said choke (n1) being charged with a rising current in the conductive state of said first transistor while in its off-state the energy stored in said choke (n1) flows through a diode (D1) to said output capacitor (C3) which discharges through said electrical load (RL), with an emitter resistor (R4) which is connected in series with said first transistor (T1) and in parallel with the base-emitter circuit of a second transistor (T2) having its collector connected to the base of said first transistor (T1), and with a feedback coil (n2) magnetically coupled to said choke (n1), said feedback coil (n2) having its one end connected to the base of said first transistor (T1) through a current-limiting resistor (R2) and a feedback capacitor (C2) connected in series, while its other end is connected to the junction of the choke (n1) and the emitter resistor (R4), characterized in that the variation of time (t2) necessary for the regulation of the output voltage (Ua), during which time current flows from said choke (n1) to said output capacitor (C3), is accomplished by means of a threshold switch (S) inserted between the node (F) of said choke (n1) connected to said output capacitor (C3) and reference potential, thus short-circuiting the coil of said choke (n1), and that a decoupling arrangement (D2) is inserted between said node (F) and said output capacitor (C3).

2. The circuitry as claimed in claim 1, characterized in that the energy stored in said choke (n1) flows through said diode (D1) and the base-emitter circuit of said second transistor (T2) to said output capacitor (C3).

3. The circuitry as claimed in claim 1, characterized in that said threshold switch (S) is a third transistor (T3) whose circuit is provided between said node (F) at the load end of said choke (n1) and reference potential, and whose base is connected to said output capacitor (C3) through a decoupling resistor (R5) and a zener diode (D3), in addition to being connected to reference potential through a resistor (R6, R7).

4. The circuitry as claimed in claim 3, characterized in that said resistor is comprised of a voltage divider (R6, R7) having diode (D1) connected to its node, with resistor (R6) which is connected to the base having a capacitor (C4) connected in parallel thereto.

5. The circuitry as claimed in claim 1, characterized in that the dc voltage source (Ue) is a rectifier connected to an ac line.

## Revendications

1. Montage pour le réglage de la tension de sortie (Ua) d'un bloc électronique d'alimentation à découpage, pour l'alimentation en courant d'un dispositif électrique de consommation (RL) branché en parallèle à un condensateur de sortie (C3), constitué d'une source de tension continue (Ue) de différents niveaux de tension avec un convertisseur inductif comportant un trajet de commutation, branché en série avec une bobine (n1), d'un premier transistor (T1) dans la phase conductrice duquel la bobine (n1) est chargée par un courant qui s'accroît et dans la phase de blocage duquel l'énergie stockée dans la bobine (n1) s'écoule par l'intermédiaire d'une diode (D1) dans le condensateur de sortie (C3) qui est déchargé par le dispositif électrique de consommation (RL), avec une résistance d'émetteur (R4) qui est branchée en série avec le premier transistor (T1) et avec laquelle est mis en parallèle le trajet base-émetteur d'un second transistor (T2) dont le collecteur est relié à la base du premier transistor (T1), et avec un enroulement de rétroaction (n2) couplé magnétiquement à la bobine (n1), l'enroulement de rétroaction (n2) étant raccordé, par l'intermédiaire du montage en série d'une résistance de limitation de courant (R2) et d'un condensateur de rétroaction (C2), d'une part à la base du premier transistor (T1) et d'autre part à la liaison de la bobine (n1 et de la résistance d'émetteur (R4), caractérisé en ce que la modification, nécessaire pour le réglage de la tension de sortie (Ua), du temps (t2) dans lequel du courant s'écoule de la bobine (n1) dans le condensateur de sortie (C3) a lieu au moyen d'un commutateur à valeur de seuil (S) qui est branché entre le point d'extrémité (F) de la bobine (n1), en liaison avec le condensateur de sortie (C3), et le potentiel de référence et qui met alors en court-circuit l'enroulement de la bobine (n1), et en ce qu'entre le point d'extrémité (F) et le condensateur de sortie (C3) est inséré un dispositif de découplage (D2).

2. Montage suivant la revendication 1, caractérisé en ce que l'énergie stockée dans la bobine (n1) s'écoule dans le condensateur de sortie (C3) par l'intermédiaire de la diode (D1) et du trajet base-émetteur du second transistor (T2).

3. Montage suivant la revendication 1, caractérisé en ce que le commutateur à valeur de seuil (S) est constitué d'un troisième transistor (T3) dont le trajet de commutation est appliqué entre le point de raccordement (F) à l'extrémité, du côté de la charge, de la bobine (n1) et le potentiel de référence et dont la base est en liaison d'une part par l'intermédiaire d'une résistance de découplage (R5) et d'une diode de Zener (D3) avec le condensateur de sortie (C3) et d'autre part par l'intermédiaire d'une résistance (R6, R7) avec le potentiel de référence.

4. Montage suivant la revendication 3, caractérisé en ce que la résistance est constituée d'un diviseur de tension (R6, R7) au point de liaison duquel est raccordée la diode (D1) et dont la résistance (R6) reliée à la base est branchée en parallèle à un condensateur (C4).

5. Montage suivant la revendication 1, caractérisé en ce qu'un redresseur de courant raccordé à un réseau à tension alternative sert en tant que source de tension continue (Ue).
